# EUROPEAN PATENT APPLICATION

(11) **EP 2 282 422 A1**
(43) Date of publication of application: **09.02.2011**
(21) Application number: 09010130.4
(22) Date of filing: 05.08.2009
(51) Int. Cl.: H04B 10/10

(54) **Infrared-receiving device with expanded module and receiving method for the same**

(71) Applicant: TOPSEED TECHNOLOGY CORP., Chung Ho City, Taipei Hsien, Taiwan 235 (TW)
(72) Inventor: Chi, Chung-Ping, Chung Ho City Taipei Hsien 235 (TW); Wu, Kun-Chan, Chung Ho City Taipei Hsien 235 (TW)
(74) Representative: Wagner, Bernhard Peter

(57) **Abstract**

An infrared-receiving device (4) includes an infrared-receiving module (41), an expanded module (43), and a microprocessor control unit (MCU) (42). The MCU (42) receives a data pulse signal (S3) transmitted from the infrared-receiving module (41). The expanded module (43) is electrically connected to the infrared-receiving module (41) and the MCU (42) to receive a substitution data pulse signal (S3) outputted from an external expanded device (44). The expanded module (44) sends the substitution data pulse signal (S3) to the MCU (42) to send a control command (C1) to an electronic appliance (2') electrically connected to the MCU (42).

## Description

### BACKGROUND OF THE INVENTION

### Field of the Invention

The present invention relates to an infrared-receiving device and a receiving method for the same, and more particularly to an infrared-receiving device with an expanded module and a receiving method for the same.

### Description of Prior Art

Owing to the prevalence of electronic products currently, TVs, electric lamps, air conditioner, audios, DVD players are widely used in houses. It seems that the remote controls are necessary to be conveniently operated for these electronic products.

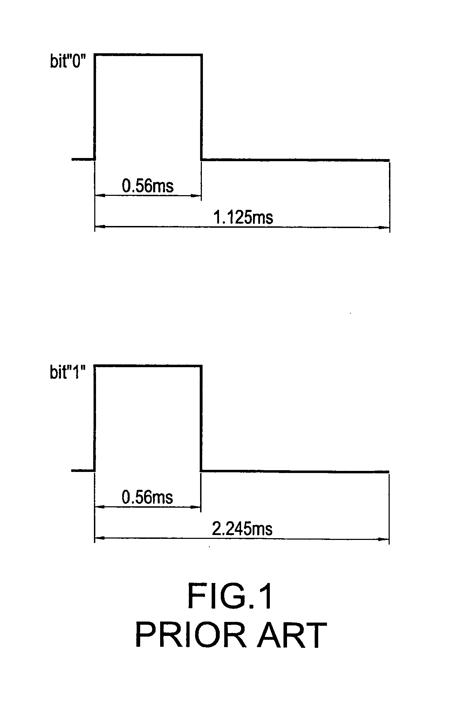

The infrared remote controls are mainly used in the market. Taiwan patent No. I296092 disclosed the infrared remote control with an emission circuit-uPD6121G, which is developed by NEC (Japan). As shown in Fig. 1 which is a waveform schematic view outputted from an emission circuit (uPD6121G). The infrared remote control (with the emission circuit-uPD6121G) (not show) adopts a modulated code word as the remote control code, which is transmitted from the infrared remote control. More particularly, a binary "0"is represented by signals with a 0.565-millisecond pulse width, a 0.56-millisecond interval width, and a1.125-millisecond code period; on the contrary, a binary "1"is represented by signals with a 0.56-millisecond pulse width, a 1.685-millisecod interval width, and a 2.245-millisecond code period.

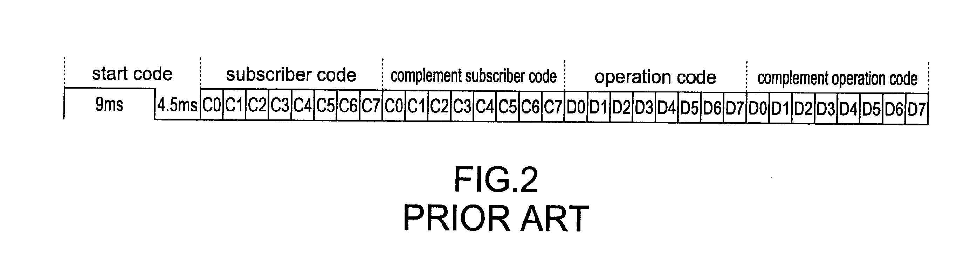

Reference is made to Fig. 2 which is a schematic view of a remote control code outputted from the emission circuit (uPD6121G). The remote control code is a series continuous 32-bit binary code. More particularly, the first-half 16 bits are divided into two parts: one is 8-bit subscriber code and the other is 8-bit complement subscriber code. Also, the first-half 16 bits are used to distinguish different types of electronic appliances to prevent the mutual interference between different remote control codes thereof. In addition, the second-half 16 bits are divided into two parts: one is 8-bit opcode (namely, operation code, and further called data code) and the other is 8-bit complement opcode. Also, the second-half 16 bits are used to represent a control command which is transmitted out from the remote controller with the emission circuit (uPD6121 G).

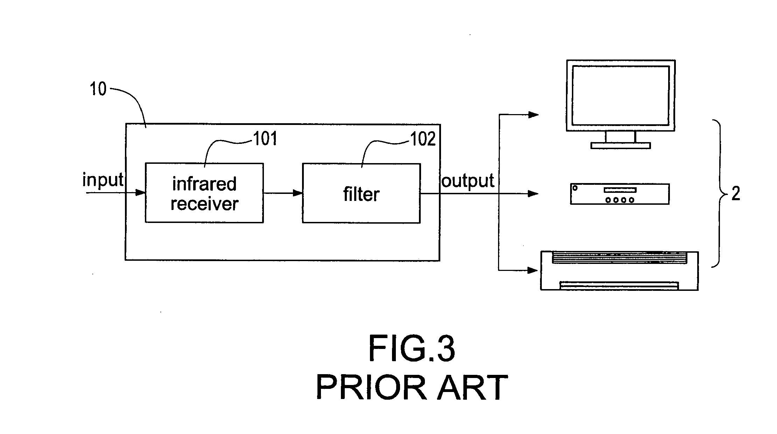

The above-mentioned remote control code is produced by coding and demodulating an infrared signal which is transmitted from an infrared emitting diode of the infrared remote control. Afterward, the infrared signal is transmitted from the infrared remote control to an infrared-receiving device. Fig. 3 shows a block diagram of the most common infrared-receiving device. The infrared-receiving device is composed of an infrared receiver 101 and a filter 102. The infrared receiver 101 receives the demodulated infrared signal transmitted form the infrared remote control, and then a carrier signal is outputted to the filter 102. The filter 102 filters out the carrier signal to output a filtered signal, and then the filtered signal is transmitted to the electronic appliance 2. Accordingly, a control command which is corresponded to the remote control code is transmitted to control the electronic appliance 2.

However, the infrared has weak penetration ability because it is belong to the long-wavelength light. In addition, the infrared remote control has to aim at the infrared-receiving device 10 in order to increase the transmission quality for a better angle detected. Besides, the infrared remote control can not be normally used when the transmission distance is long to result in poor efficiency.

### SUMMARY OF THE INVENTION

Accordingly, a primary object of the present invention is to provide an infrared-receiving device with an expanded module and a receiving method for the same. An expanded module is provided to electrically connect to an expanded device to receive a data pulse signal. Also, a substitution data pulse signal is provide to imitate the data pulse signal to replace a signal outputted from an infrared-receiving module to send a control command.

In order to achieve the objective mentioned above, the infrared-receiving device includes an infrared-receiving module, an expanded module, and a microprocessor control unit. The microprocessor control unit receives a data pulse signal transmitted from the infrared-receiving module. The expanded module is electrically connected to the infrared-receiving module and the microprocessor control unit to receive a substitution data pulse signal outputted from an external expanded device. The expanded module sends the substitution data pulse signal to the microprocessor control unit to send a control command to an electronic appliance electrically connected to the microprocessor control unit.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a waveform schematic view outputted from an emission circuit (uPD6121 G);
Fig. 2 is a schematic view of a remote control code outputted from the emission circuit (uPD6121 G);
Fig. 3 is a block diagram of a prior art infrared-receiving device;
Fig. 4 is a block diagram of a preferred embodiment of an infrared-receiving device according to the present invention;
Fig. 5 is a schematic view of connecting between an expanded device and an expanded module of the preferred embodiment;
Fig. 6 is a block diagram of the preferred embodiment of an expanded device;
Fig. 7 is a schematic view of the in-use condition of the preferred embodiment; and
Fig. 8 is a flowchart of the preferred embodiment.

### DETAILED DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

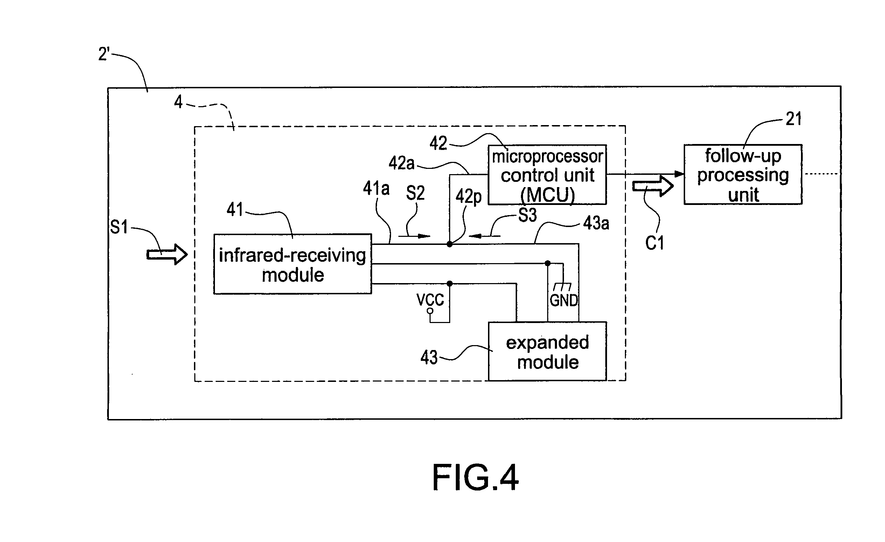

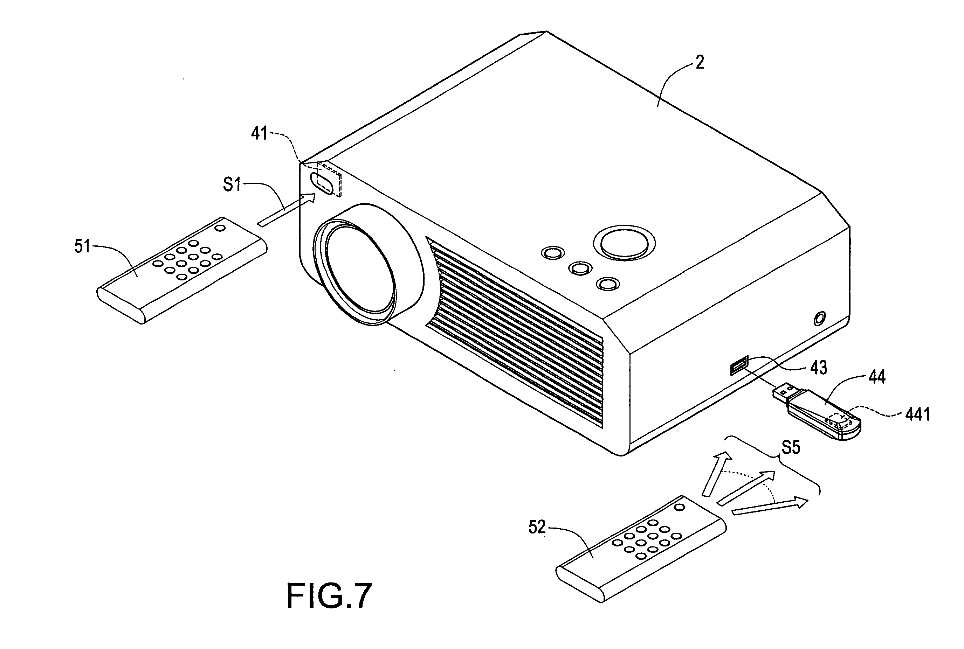

Reference will now be made to the drawing figures to describe the present invention in detail. Reference is made to Fig. 4 which is a block diagram of a preferred embodiment of an infrared-receiving device according to the present invention. The infrared-receiving device 4 is installed in an electronic appliance 2'. The infrared-receiving device 4 includes an infrared-receiving module 41, a microprocessor control unit (MCU) 42, and an expanded module 43. The infrared-receiving module 41 includes at least three connecting wires, such as a power wire VCC, a ground wire GND, and a first data wire 41a. The infrared-receiving module 41 receives an infrared signal S1 which is demodulated outside the infrared-receiving module 41. The infrared signal S1 is processed by the infrared-receiving module 41 to output a data pulse signal S2 through the first data wire 41a. The microprocessor control unit 42 has a second data wire 42a, and a first node 42p is on the second data wire 42a. In addition, the first data wire 41a is connected to the first node 42p on the second data wire 42a to send the data pulse signal S2 to the microprocessor control unit 42. Also, a control command C1 is transmitted from the microprocessor control unit 42 to a follow-up processing unit 21 in the electronic appliance 2' to control the electronic appliance 2'. For example, the follow-up processing unit 21 can handle the channel selection for TVs or the temperature control for air conditioners, when the electronic appliance 2' is a TV or an air conditioner. More particularly, the infrared signal S1 can be transmitted from an infrared remote-controlling device 51 as shown in Fig. 7. However, this example is for demonstration and not for limitation of the present invention.

More particularly, the common electronic appliances 2' are mostly controlled remotely via infrared signals. Namely, the microprocessor control units 42 inside the electronic appliances 2' have capability to process the data pulse signal S2. Hence, in the present invention, the microprocessor control unit 42 of the electronic appliance 2' can be used directly without any adjusting and modifying.

The expanded module 43 includes a power wire VCC and a ground wire GND, which are the same as the power wire VCC and the ground wire GND of the infrared-receiving module 41, and an expanded data wire 43a which is connected to the first node 42p. The expanded module 43 outputs a data signal though the expanded data wire 43a. If the data signal and the data pulse signal S2 are in compatible format, the data signal is received to be a substitution data pulse signal S3 to imitate the data pulse signal S2 outputted from the infrared-receiving module 41. Also, the substitution data pulse signal S3 is transmitted to the microprocessor control unit 42 to output a control command C1 to control the operation of the electronic appliance 2'. According to one embodiment of the present invention, the expanded module 43 can be a Mini DIN connector or a USB connector. This example is for demonstration and not for limitation of the present invention.

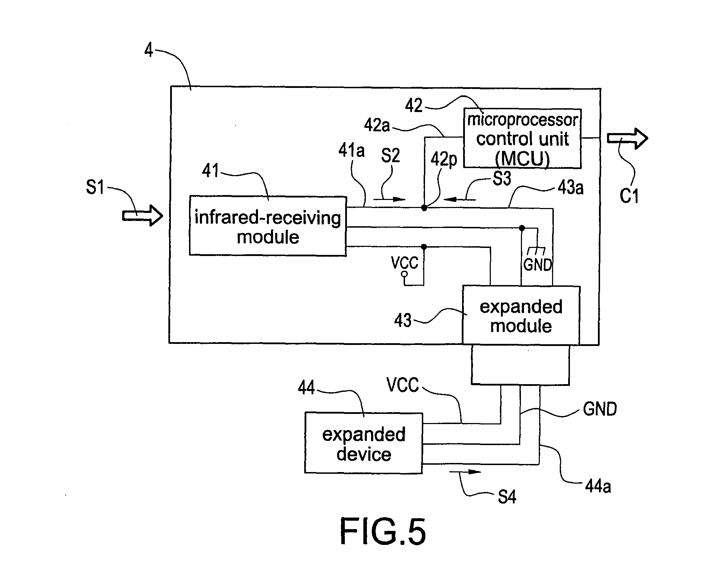

Reference is made to Fig. 5 which is a schematic view of connecting between an expanded device and an expanded module of the preferred embodiment. The expanded module 43 of the infrared-receiving device 4 can be connected to an expanded device 44 outside the infrared-receiving device 4. Hence, the expanded module 43 is used to receive an output data signal S4 which is outputted from the expanded device 44. Also, the required power to the expanded device 44 can be supplied from the electronic appliance 2' though connecting the expanded module 43 to a power line VCC a ground line GND of the expanded device 44. More particularly, the expanded device 44 has a connecting port, such as a Mini DIN connecting port or a USB connecting port, which is corresponding to the expanded module 43. Hence, the expanded device 44 is electrically connected to the expanded module 43 through the connecting port. This example is for demonstration and not for limitation of the present invention.

If the output data signal S4 (which is outputted from the expanded device 44 to the expanded module 43) and the data pulse signal S2 are in compatible format, the substitution data pulse signal S3 is provided to imitate the data pulse signal S2. Also, the substitution data pulse signal S3 is transmitted to the microprocessor control unit 42 to output a control command C1 to control the operation of the electronic appliance 2'. Accordingly, another infrared receiver can be used by electrically connecting to the expanded module 43 without replacing the infrared-receiving module 41 in the electronic appliance 2' when the infrared-receiving module 41 is faulted. In addition, if a new technology, such as wireless RF remote-controlling device, is developed in the market, the expanded device 44 is adapted to cooperate with the new wireless RF remote-controlling device in order to output a demodulated output signal to be in compatible format with the data pulse signal S2 without replacing the infrared-receiving device 4 in the electronic appliance 2'.

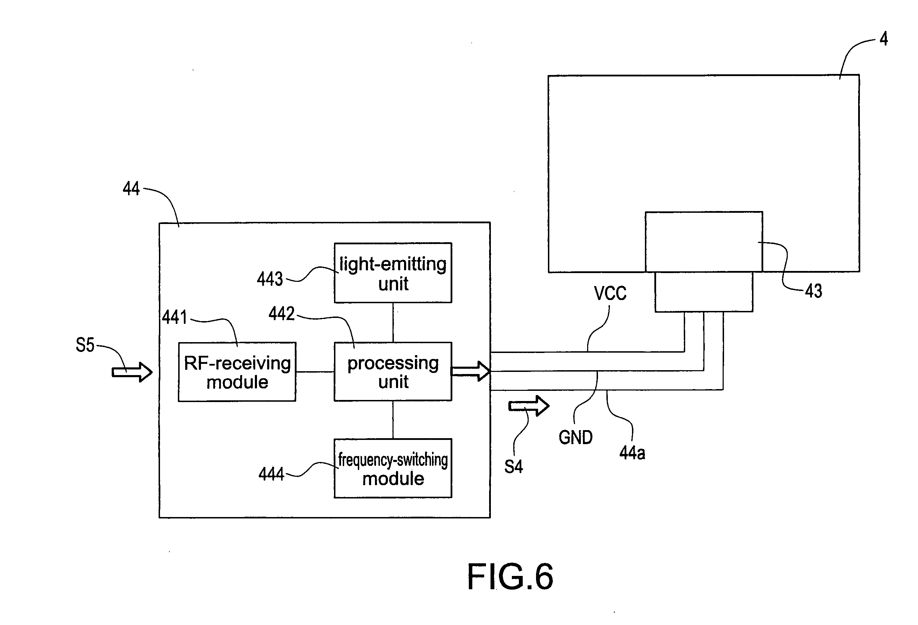

In this example, the wireless RF remote-controlling device is exemplified for further demonstration. Reference is made to Fig. 6 which is a block diagram of the preferred embodiment of an expanded device. The expanded device 44 includes an RF-receiving module 441 and a processing unit 442. The RF-receiving module 441 is used to receive an RF signal S5 which is transmitted from an external RF remote-controlling device 52 (as shown in Fig. 7). The RF signal S5 is demodulated by the processing unit 442 to produce an output data signal S4 which is in compatible format with the data pulse signal S2. The expanded device 44 has a third data wire 44a. The output data signal S4, namely the substitution data pulse signal S3, is transmitted to the expanded data wire 43a through the third data wire 44a when the expanded device 44 is electrically connected to the expanded module 43. The substitution data pulse signal S3 is transmitted, through the first node 42p, to the second data wire 42a. More particularly, the substitution data pulse signal S3 (where the data pulse signal S2 is imitated by the substitution data pulse signal S3) is transmitted to the microprocessor control unit 42. The substitution data pulse signal is processed by the microprocessor control unit 42 to output a control command C1 to control the operation of the electronic appliance 2'.

The expanded device 44 further includes a light-emitting unit 443 and a frequency-switching module 444. The light-emitting unit 443 can be preferably a light emitting diode (LED). Also, the light-emitting unit 443 is illuminated as the expanded device 44 is normally operated. The frequency-switching module 444 is provided to adjust a frequency of the expanded device 44 to mutually pair with the RF remote-controlling device 52. Accordingly, the RF signal S5, which is outputted from the RF remote-controlling device 52, can be stably received by the RF-receiving module 441 without being interrupted by other signals.

Based on the specification of the expanded device 44, the receiving device (infrared-receiving device) 4 can produce a substitution data pulse signal S3, which can processed from various wireless signal such as an RF signal or a bluetooth signal, to imitate the data pulse signal S2 outputted from the infrared-receiving module 41. Hence, any type of wireless remote-controlling device can be applied to the electronic appliance 2' with the receiving device (infrared-receiving device) 4.

Reference is made to Fig. 7 which is a schematic view of the in-use condition of the preferred embodiment. The receiving device (infrared-receiving device) 4 is installed in a housing (not labeled) of the electronic appliance 2'. The infrared-receiving module 41 receives the infrared signal S1, which is transmitted from the infrared remote-controlling device 51, to control the electronic appliance 2'. A part of the expanded module 43 is exposed outside the housing to be conveniently connected by the expanded device 44. Also, the expanded module 43 is electrically connected to the expanded device 44 through a USB connector and a USB connecting port, respectively. This example is for demonstration and not for limitation of the present invention.

The RF-receiving module 441 of the expanded device 44 receives the RF signal S5 which is transmitted from the RF remote-controlling device 52. As shown in Fig. 7, the RF-remote-controlling device 52 can be normally operated without precisely aiming at the RF-receiving module 441 and with larger transmission distance. Accordingly, it is convenient and friendly to operate the remote-controlling device for users.

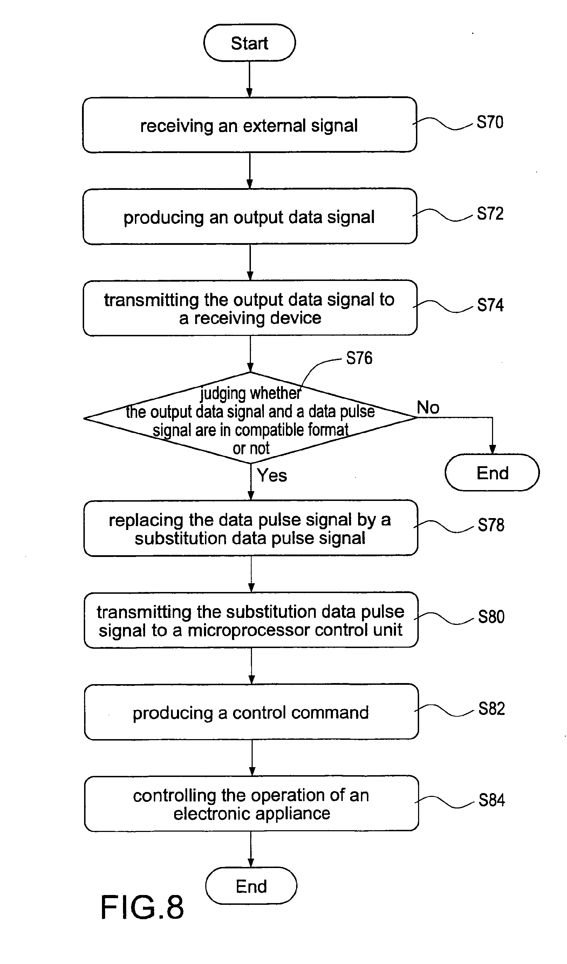

Reference is made to Fig. 8 which is a flowchart of the preferred embodiment of a method for using an infrared-receiving device with an expanded module. First, an expanded module 43 (shown in Fig. 4) is provided. Also, the expanded module 43 has an expanded data wire 43a. The expanded data wire 43a is electrically connected to an infrared-receiving module 41 and a microprocessor control unit 42 through a first node 42p. Hence, a substitution data pulse signal, which is received by the expanded module 43, can be provided to imitate an output signal outputted from the infrared-receiving module 41. Afterward, the substitution data pulse signal is processed by the microprocessor control unit 42 to output a control command C1 to control the operation of an electronic appliance 2'. The detailed operation between the expanded module 43 and the expanded device 44 is described as follows. First, the expanded device 44 receives an external signal such as the RF signal S5 (S70). Afterward, the external signal is demodulated inside the expanded device 44 to produce an output data signal S4 (S72). Afterward, the output data signal S4 is transmitted from the expanded device 44 to the receiving device (infrared-receiving device) 4 when the expanded device 44 is electrically connected to the expanded module 43 (S74).

Afterward, the receiving device (infrared-receiving device) 4 judges whether the output data signal S4 and the data pulse signal S2 are in compatible format or not after the output data signal S4 is transmitted to the receiving device (infrared-receiving device) 4 (S76). If the output data signal S4 and the data pulse signal S2 are in compatible format, the output data signal S4 is received to be a substitution data pulse signal S3 and to replace the data pulse signal S2 outputted from the infrared-receiving module 41 (S78). Afterward, the substitution data pulse signal S3 is transmitted to the microprocessor control unit 42 for further procession (S80). Finally, the control command C1 is produced from the receiving device (infrared-receiving device) 4 according to the substitution data pulse signal S3 processed by the microprocessor control unit 42 (S82). The control command C1 is transmitted to the follow-up processing unit 21 to control the operation of the electronic appliance 2' (S84).

## Claims

1. An infrared-receiving device (4) with an expanded module (43), the infrared-receiving device receiving a substitution data pulse signal (S3) to replace a data pulse signal (S2) and to produce a control command (C1), the infrared-receiving device (4) comprising:
an infrared-receiving module (41) receiving an infrared signal (S1), and demodulating the infrared signal (S1) to produce the data pulse signal (S2);
a microprocessor control unit (42) electrically connected to the infrared-receiving module (41) to receive the data pulse signal (S2) and produce the control command (C1); and
an expanded module (43) electrically connected to the infrared-receiving module (41) and the microprocessor control unit (42) to receive the substitution data pulse signal (S3), and the expanded module (43) adapted to use the substitution data pulse signal (S3) to replace the data pulse signal (S2) and transmit the substitution data pulse signal (S3) to the microprocessor control unit (42);
wherein the substitution data pulse signal (S3) and the data pulse signal (S2) are in compatible format.

2. The infrared-receiving device (4) in claim 1, further comprising an expanded device (44), which produces the substitution data pulse signal (S3), and the expanded device (44) including:
a receiving module (441) receiving an external signal (S5); and
a processing unit (442) electrically connected to the receiving module (441) to receive and demodulate the external signal (S5) and then to output the substitution data pulse signal (S3).

3. The infrared-receiving device (4) in claim 2, wherein the receiving module (441) is an RF-receiving module (441), and the external signal (S5) is an RF signal (S5).

4. The infrared-receiving device (4) in claim 3, wherein the expanded device (44) further comprises:
a light-emitting unit (443) electrically connected to the processing unit (442), and the light-emitting unit (443) illuminated as the expanded device (44) is normally operated; and
a frequency-switching module (444) electrically connected to the processing unit (442) to adjust a frequency of the expanded device (44) whereby the expanded device (44) is paired in frequency with an external RF remote-controlling device (52).

5. The infrared-receiving device (4) in claim 4, wherein the light-emitting unit (443) is a light emitting diode.

6. The infrared-receiving device (4) in claim 2, wherein the expanded module (43) is a Mini DIN connector or a USB connector, and the expanded device (44) is electrically connected to the expanded module (43) through connecting port corresponded to the expanded module (43).

7. An infrared-receiving device (4) with an expanded module (43), the infrared-receiving device (4) receiving a substitution data pulse signal (S3) to replace a data pulse signal (S2), and the substitution data pulse signal (S3) in compatible format with the data pulse signal (S2) to produce a control command (C1), the infrared-receiving device (4) comprising:
an infrared-receiving module (41) having a first data wire (41a) and receiving an infrared signal (S1), and the infrared-receiving module (41) demodulating the infrared signal (S1) to output the data pulse signal (S2);
a microprocessor control unit (42) having a second data wire (42a) electrically connected to the first data wire (41a) to produce a first node (42p), wherein the microprocessor control unit (42) is adapted to receive the data pulse signal (S2) to produce the control command (C1); and
an expanded module (43) having an expanded data wire (43a) and electrically connected to the first node (42p) to imitate the data pulse signal (S2) by the substitution data pulse signal (S3), and the expanded module (43) transmitting the substitution data pulse signal (S3) to the microprocessor control unit (42);
wherein the first data wire (41a) is electrically connected to the second data wire (42a) and the expanded data wire (43a) at the first node (42p), and the signals outputted from the first data wire (41a) and the expanded data wire (43a) are transmitted to the microprocessor control unit (42) through the second data wire (42a).

8. The infrared-receiving device (4) in claim 7, further comprising an expanded device (44), which produces the substitution data pulse signal (S3), and the expanded device (44) including:
a receiving module (441) receiving an external signal (S5); and
a processing unit (442) electrically connected to the receiving module (441) to receive and demodulate the external signal (S5) and to output the substitution data pulse signal(S3).

9. The infrared-receiving device (4) in claim 8, wherein the receiving module (441) is an RF-receiving module (441), and the external signal (S5) is an RF signal (S5).

10. The infrared-receiving device (4) in claim 9, wherein the expanded device (44) further comprises:
a light-emitting unit (443) electrically connected to the processing unit (442), and the light-emitting unit (443) illuminated as the expanded device (44) is normally operated; and
a frequency-switching module (444) electrically connected to the processing unit (442) to adjust a frequency of the expanded device (44), whereby the expanded device (44) is paired in frequency with an external RF remote-controlling device (52),
wherein the light-emitting unit (443) is a light emitting diode.

11. The infrared-receiving device (4) in claim 8, wherein the expanded module (43) is a Mini DIN connector or a USB connector, and the expanded device (44) is electrically connected to the expanded module (43) through connecting port corresponded to the expanded module (43).

12. A method for using an infrared-receiving device (4) with an expanded module (43) to process an external signal (S5) to imitate a data pulse signal (S2) demodulated from an infrared signal (S1); the infrared-receiving device (4) including an RF-receiving module (41) and a microprocessor control unit (42), and the microprocessor control unit (42) receiving the data pulse signal (S2), the method comprising the steps of:
(a) providing an expanded module (43) with an expanded data wire (43a) electrically connected to the microprocessor control unit (42) and the infrared-receiving module (41); and
(b) sending a substitution data pulse signal (S3) through the expanded data wire (43a) from the expanded module (43) to the microprocessor control unit (42) to imitate the data pulse signal (S2).

13. The method in claim 12, further comprising the steps of:
(c) providing an expanded device (44) with a receiving module (441) and a processing unit (442) to electrically connect to the expanded module (43);
(d) receiving the external signal (S5) through the receiving module (441);
(e) producing the substitution data pulse signal (S3) through the processing unit (442) after demodulating the external signal (S5); and
(f) sending the substitution data pulse signal (S3) to the expanded module (43) through the processing unit (442).

14. The method in claim 13, wherein the receiving module (441) is an RF-receiving module (441), and the external signal (S5) is an RF signal (S5).

15. The method in claim 13, wherein the expanded module (43) is a Mini DIN connector or a USB connector, and the expanded device (44) is electrically connected to the expanded module (43) through connecting port corresponded to the expanded module (43).
